# EUROPEAN PATENT SPECIFICATION

(11) **EP 4 296 797 B1**
(45) Date of publication and mention of the grant of the patent: **17.09.2025**
(21) Application number: 22756085.1
(22) Date of filing: 10.02.2022
(51) Int. Cl.: G04F 5/14, H01S 1/06, G01C 19/62, G01R 33/26, G01V 7/14, G21K 1/00, H03L 7/26, H05H 3/02, H05H 3/04, G01N 21/74

(54) **ATOM BEAM GENERATION DEVICE, PHYSICAL PACKAGE, OPTICAL LATTICE CLOCK PHYSICAL PACKAGE, ATOMIC CLOCK PHYSICAL PACKAGE, ATOMIC INTERFEROMETER PHYSICAL PACKAGE, QUANTUM INFORMATION PROCESSING DEVICE PHYSICAL PACKAGE, AND PHYSICAL PACKAGE SYSTEM**
ATOMSTRAHLERZEUGUNGSVORRICHTUNG, PHYSIKALISCHES GEHÄUSE, ATOMUHRGEHÄUSE, PHYSIKALISCHES ATOMINTERFEROMETERPAKET, QUANTENINFORMATIONSVERARBEITUNGSSYSTEM
DISPOSITIF DE GÉNÉRATION DE FAISCEAU D'ATOMES, LOGEMENT PHYSIQUE, LOGEMENT PHYSIQUE D'HORLOGE DE RÉSEAU OPTIQUE, LOGEMENT PHYSIQUE D'HORLOGE ATOMIQUE, LOGEMENT PHYSIQUE D'INTERFÉROMÈTRE ATOMIQUE, LOGEMENT PHYSIQUE DE DISPOSITIF DE TRAITEMENT D'INFORMATIONS QUANTIQUES ET SYSTÈME DE LOGEMENT PHYSIQUE

(30) Priority: 16.02.2021 JP 2021022201
(43) Date of publication of application: 27.12.2023
(73) Proprietor: JEOL Ltd., Akishima, Tokyo 196-8558 (JP); RIKEN, Wako, Saitama 351-0198 (JP)
(72) Inventor: TSUJI, Shigenori, Akishima, Tokyo 196-8558 (JP); TAKAMOTO, Masao, Wako, Saitama 351-0198 (JP); KATORI, Hidetoshi, Wako, Saitama 351-0198 (JP)
(74) Representative: Boult Wade Tennant LLP
(86) International application number: PCT/JP2022/005302
(87) International publication number: WO 2022/176765

(56) References cited:
- JP-A- 2009 231 688
- JP-A- 2018 510 494
- JP-A- 2019 129 166
- JP-B2- 6 206 973
- SMITH LYNDSIE LAURA ET AL: "A transportable strontium optical lattice clock towards space", 1 December 2016 (2016-12-01), pages 1 - 233, XP093137355, Retrieved from the Internet <URL:https://etheses.bham.ac.uk/id/eprint/7132/1/Smith16PhD.pdf> [retrieved on 20240304]
- SCHIOPPO M ET AL: "A compact and efficient strontium oven for laser-cooling experiments", REVIEW OF SCIENTIFIC INSTRUMENTS, AMERICAN INSTITUTE OF PHYSICS, 2 HUNTINGTON QUADRANGLE, MELVILLE, NY 11747, vol. 83, no. 10, 1 October 2012 (2012-10-01), pages 103101 - 103101, XP012161370, ISSN: 0034-6748, [retrieved on 20121001], DOI: 10.1063/1.4756936
- HOEKSTRA STEVEN: "University of Groningen Atom Trap Trace Analysis of Calcium Isotopes", 1 March 2005 (2005-03-01), Groningen, pages 1 - 137, XP093184961, Retrieved from the Internet <URL:https://pure.rug.nl/ws/portalfiles/portal/2891358/thesis.pdf>
- WODEY E ET AL: "A robust, high-flux source of laser-cooled ytterbium atoms", ARXIV.ORG, CORNELL UNIVERSITY LIBRARY, 201 OLIN LIBRARY CORNELL UNIVERSITY ITHACA, NY 14853, 17 August 2020 (2020-08-17), XP081883300, DOI: 10.1088/1361-6455/ABD2D1

## Description

### TECHNICAL FIELD

The present invention relates to an atomic beam generation device, a physics package, a physics package for an optical lattice clock, a physics package for an atomic clock, a physics package for an atom interferometer, a physics package for a quantum information processing device, and a physicals package system.

### BACKGROUND

Optical lattice clocks are atomic clocks proposed by KATORI Hidetoshi, who is one of the inventors of the present application. An optical lattice clock confines atoms in an optical lattice formed by laser light, and measures the resonant frequency in a visible light range. Accordingly, optical lattice clocks can achieve 18-digit accuracy measurement, which surpasses the accuracies of current cesium clocks. Optical lattice clocks have been eagerly researched and developed not only by the group including the inventors but also by various groups inside and outside of this country, and have been developed as next-generation atomic clocks.

The latest technology of optical lattice clocks is described in the following Patent Documents 1 to 3, for example. Patent Document 1 describes that a one-dimensional moving optical lattice is formed in an optical waveguide having a hollow pathway. Patent Document 2 describes an aspect of setting an effective magic frequency. Patent Document 3 describes a radiation shield that reduces adverse effects of blackbody radiation emitted from surrounding walls.

The optical lattice clock measures time with high accuracy. Accordingly, the optical lattice clock can detect an elevation difference of 1 cm on the Earth based on the general relativistic effect due to gravity, as a deviation in temporal progress. Accordingly, if the optical lattice clock is made miniaturized, transportable and usable in a field outside of a laboratory, it would be applicable to new geodetic technologies, such as underground resource exploration, and detection of underground cavities and magma chambers. Optical lattice clocks are mass-produced, and installed at many locations, and temporal variation in gravitational potential is continuously monitored, which allows applications that include detection of diastrophism, and spatial mapping of the gravitational field. Thus, optical lattice clocks are expected to contribute to society as a new fundamental technology beyond the bounds of highly accurate time measurement.

Incidentally, an atomic oven has been known as a device that generates an atomic beam for an optical lattice clock. In general, an atomic oven is designed so as to generate highly collimated and oriented atomic beam with suitable flux density and velocity distribution.

Typically, the quantity of atomic source that can be loaded is limited by volume of a reservoir in the atomic oven. Larger quantities of atomic source increase the total size of the atomic beam oven, the region to be heated, and the heater power required. Such results hinder miniaturization and power saving of the atomic oven.

Simplicity of operation required to fill and refill the atomic oven with the atom source is effective not only in initial startup of the optical lattice clock system but also in maintenance in a case of depletion of the atom source.

Non Patent Document 1 describes an atomic oven that allows refilling with an atom source. The atomic oven includes: an ICF70 flange for attaching the atomic oven to an atomic clock main body; and an ICF34 flange which includes a gasket made of nickel, and through which a sample chamber can be accessed. The ICF34 flange is a flange that enables replacement and refilling with an atom source.

Non Patent Document 2 discloses an oven for generating an atomic beam comprising a reservoir for strontium atoms mounted on a standard blank flange, heating element and insulating materials, the micro-capillaries which serve to collimate the atomic beam, and the heat shield.

### CITATION LIST

### PATENT LITERATURE

Patent Document 1: JP 6206973 B
Patent Document 2: JP 2018-510494 A
Patent Document 3: JP 2019-129166 A

### NON PATENT LITERATURE

Non Patent Document 1: M. Schioppo et.al. REVIEW OF SCIENTIFIC INSTRUMENTS 83, 103101 (2012)
Non Patent Document 2: Smith Lyndsie Laura ET AL: "A transportable strontium optical lattice clock towards space",, 1 December 2016 (2016-12-01), pages 1-233, XP093137355,Retrieved from the Internet: URL:https://etheses.bham.ac.uk/id/eprint/7132/1/ Smith16PhD.pdf

### SUMMARY

### TECHNICAL PROBLEM

It considers refilling the atomic source of the atomic oven when the operation is stopped for maintenance or when the atomic source is depleted. According to the atomic oven described in Non Patent Document 1, in view of the structure, the ICF34 flange resides on the vacuum side of the atomic oven. Consequently, the ICF34 flange cannot be directly accessed from the atmosphere side. Therefore, for refilling with an atom source, the ICF70 flange is temporarily dismantled, and the atomic oven is detached from an atomic clock, some components of a vacuum chamber are disassembled, and then access is achieved through the ICF34 flange and refilling with an atom source is performed. As described above, according to the conventional art, the inside of the vacuum chamber of the atomic oven is required to be disassembled, thus complicating operation for replacement and refilling with an atom source.

An object of the present invention is to provide an atomic beam generation device capable of replacement and refilling with an atom source by simple operation without disassembling components on the vacuum side.

### SOLUTION TO PROBLEM

An aspect of the present invention is an atomic beam generation device, including: a cartridge containing an atomic source; and a main body where the cartridge is installed, wherein the main body includes: an installation portion where the cartridge is installed; a temperature adjustment mechanism that adjusts a temperature of the atom source accommodated in the cartridge ; an access port which is provided on an atmosphere side residing outside of the main body and through which the cartridge is inserted into and detached from the main body; and a pathway from the access port to the installation portion. The atomic beam generation device operates at a temperature to emit the desired atomic beam flux to the vacuum chamber.

According to the configuration described above, the cartridge can be inserted into and detached from the installation portion of the main body of the atomic beam generation device through the access port on the atmosphere side. For example, a cartridge accommodating a spent atom source is taken out on the atmosphere side residing outside of the main body through the access port, and another cartridge accommodating an atom source is inserted into the main body through the access port, thus allowing the atom source to be replaced. Replacement and refilling with the atom source can be achieved by such simple operation.

The atomic beam generation device may further include a press mechanism that pushes the cartridge installed in the installation portion from a side of the access port to a side of the installation portion. The cartridge is pushed toward the installation portion by the press mechanism, thus allowing the cartridge to be stably installed in the installation portion.

The press mechanism may push the cartridge toward the installation portion by an elastic force of a spring. As the spring, for example, a coil spring may be used. It is a matter of course that a spring other than the coil spring may be used, or an elastic member other than the spring may be used.

An outer peripheral surface of the holder may have a tapered shape toward a distal end of the holder, and a surface of the installation portion on which the cartridge is installed may have a flared shape conforming to a shape of an outer peripheral surface of the holder. By forming the outer peripheral surface of the holder to have the tapered shape and forming the surface of the installation portion to have the flared shape, processing of these surfaces is facilitated, and the cartridge can be stably installed in the installation portion.

A threaded groove may be formed in a surface of the installation portion on which the cartridge is installed, and a threaded groove meshing with the threaded groove of the installation portion may be formed in an outer peripheral surface of the holder. By meshing the threaded groove in the outer peripheral surface of the holder with the threaded groove in the installation portion, the cartridge can be stably installed in the installation portion.

The cartridge may further include a nozzle integrated in the holder, and the atomic gas generated from the atom source may be emitted on the vacuum side through the nozzle.

The temperature adjustment mechanism may be installed around the nozzle. According to this configuration, a temperature gradient is formed between the nozzle and the sample chamber in the holder. For example, in a case where the temperature adjustment mechanism is a heater, the temperature at the nozzle is higher than the temperature in the sample chamber. Accordingly, the atomic gas generated from the atom source by being heated by the heater can be restrained or prevented from clogging of the aperture.

The atom source may be an atom source that generates the atomic gas by being heated, the temperature adjustment mechanism may be a heater that heats the atom source, and the nozzle may be sealed with an openable seal that is melted by being heated by the heater. According to this configuration, the inside of the holder is not exposed to the atmosphere until the seal is evaporated. Consequently, the atom source accommodated in the holder can be restrained or prevented from being oxidized or deteriorating. As the atom source, for example, strontium, ytterbium or the like is used. As the openable seal, for example, indium is used.

The atom source may be an atom source that generates the atomic gas by being cooled, and the temperature adjustment mechanism may be a cooling mechanism that cools the atom source. As the atom source, for example, mercury or the like is used.

An aspect of the present invention is a physics package that includes: the atomic beam generation device described above; and a vacuum chamber that encloses a clock transition space where atoms are arranged.

An aspect of the present invention is a physics package for an optical lattice clock, the package including the physics package described above.

An aspect of the present invention is a physics package for an atomic clock, the package including the physics package described above.

An aspect of the present invention is a physics package for an atom interferometer, the package including the physics package described above.

An aspect of the present invention is a physics package for a quantum information processing device for atoms or ionized atoms, the package including the physics package described above.

An aspect of the present invention is a physics package system including the physicals package described above.

### ADVANTAGEOUS EFFECT OF INVENTION

According to the present invention, an atomic beam generation device capable of replacement and refilling with an atom source by simple operation without disassembling components on the vacuum side can be provided.

### BRIEF DESCRIPTION OF DRAWINGS

FIG. 1 is a block diagram showing an overall configuration of an optical lattice clock according to this embodiment.
FIG. 2 schematically shows a physics package of an optical lattice clock according to this embodiment.
FIG. 3 is a sectional view of an atomic oven according to Example 1.
FIG. 4 is a sectional view of the atomic oven according to Example 1.
FIG. 5 is an exploded perspective view of the atomic oven according to Example 1.
FIG. 6 is a sectional view of an atomic oven according to Example 2.
FIG. 7 is a sectional view of the atomic oven according to Example 2.
FIG. 8 is a sectional view of an atomic beam generation device according to Example 3.
FIG. 9 is a sectional view of the atomic beam generation device according to Example 3.
FIG. 10 is a perspective view of a cartridge.

### DESCRIPTION OF EMBODIMENTS

### <Configuration of optical lattice clock>

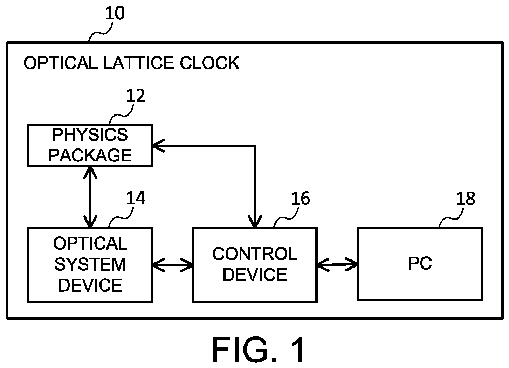

With reference to FIG. 1, a schematic configuration of an optical lattice clock 10 that uses an atomic beam generation device according to this embodiment will be described. FIG. 1 is a block diagram showing the overall configuration of the optical lattice clock 10. Here, description is given with an example of the optical lattice clock 10 as an example of a device that uses the atomic beam generation device. It is a matter of course that the atomic beam generation device according to this embodiment may be used for a device other than the optical lattice clock 10.

The optical lattice clock 10 includes, for example, a physics package 12, an optical system device 14, a control device 16, and a PC (Personal Computer) 18.

The physics package 12 is a device that traps an atoms, confines them in an optical lattice, and causes clock transitions. The optical system device 14 is a device provided with optical devices that include a laser light source for trapping atoms, a laser light source for clock transition excitation, and a laser frequency control device. The optical system device 14 not only transmits the laser light to the physics package 12, but also performs processes of receiving a fluorescent signal emitted by the atoms in the physics package 12, converting it into an electric signal, and feeding back the signal to the laser light source so as to match the resonant frequency of the atoms. The control device 16 is a device that controls the physics package 12 and the optical system device 14. For example, the control device 16 performs operation control of the physics package 12, operation control of the optical system device 14, and analysis processes, such as frequency analysis of clock transition obtained by measurement. The physics package 12, the optical system device 14 and the control device 16 cooperate with each other, thus realizing the function of the optical lattice clock 10.

The PC 18 is a general-purpose computer that includes a processor and a memory. Software is executed by hardware that includes the processor and the memory, thus realizing the function of the PC 18. An application program for controlling the optical lattice clock 10 is installed in the PC 18. The PC 18 is connected to the control device 16, and not only controls the control device 16, but also controls the entire optical lattice clock 10, which includes the physics package 12 and the optical system device 14. The PC 18 provides an UI (User Interface) of the optical lattice clock 10. A user can perform activation of the optical lattice clock 10, time measurement, result confirmation and the like, through the PC 18.

Note that a system that includes the physics package 12 and a configuration required to control the physics package 12 is sometimes called a "physics package system". The configuration required for control may be included in the control device 16 or the PC 18, or included in the physics package 12. Part or the entirety of the function of the control device 16 may be included in the physics package 12.

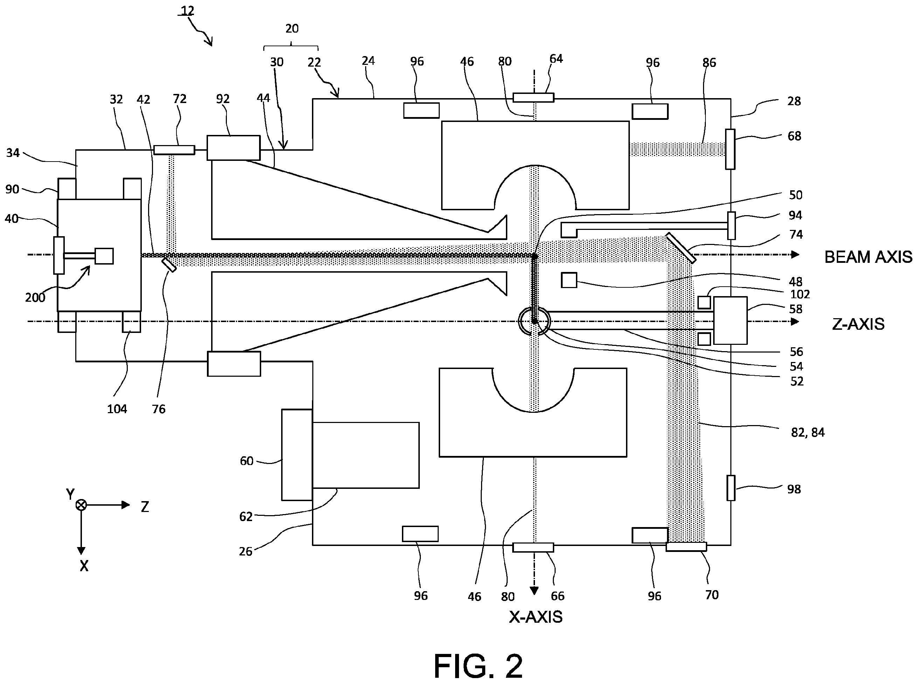

Hereinafter, with reference to FIG. 2, the physics package 12 will be described. FIG. 2 schematically shows the physics package 12 of the optical lattice clock according to this embodiment.

The physics package 12 includes a vacuum chamber 20, an atomic oven 40, a coil 44 for a Zeeman slower, an optical cavity 46, a coil 48 for a MOT (Magneto-Optical Trap) device, a cryogenic radiation shield 54, a thermal link member 56, a cooler 58, a vacuum pump main body 60, and a vacuum pump cartridge 62. The atomic oven 40 is an example of the atomic beam generation device.

The vacuum chamber 20 is a case that maintains the main part of the physics package 12 at a vacuum, and is formed to have a substantially cylindrical shape. In particular, the vacuum chamber 20 includes a main body 22 formed to have a large substantially cylindrical shape, and a protruding portion 30 formed to have a small substantially cylindrical shape that protrudes from the main body 22. The main body 22 is a portion that internally stores the optical cavity 46 and the like. The main body 22 includes a cylindrical wall 24 that serves as a side surface of the cylinder, and a front circular wall 26 and a rear circular wall 28 which serve as circular surfaces of the cylinder. The front circular wall 26 is a wall provided with the protruding portion 30. The rear circular wall 28 is a wall opposite to the protruding portion 30, and has a shape with a larger diameter than that of the cylindrical wall 24.

The protruding portion 30 includes a cylindrical wall 32 serving as a side surface of the cylinder, and a front circular wall 34. The front circular wall 34 is a circular surface remote from the main body 22. A portion of the protruding portion 30 adjacent to the main body 22 has an almost open shape, is connected to the main body 22, and has no wall part.

The vacuum chamber 20 is arranged so that the central axis (called a Z-axis) of the cylinder of the main body 22 is substantially horizontal. The central axis (this axis serves as a beam axis) of the cylinder of the protruding portion 30 extends parallel to the Z-axis vertically below the Z-axis.

The vacuum chamber 20 is made sufficiently robust from metal, such as SUS (stainless steel), so as to withstand difference in air pressure when the inside becomes a vacuum. The vacuum chamber 20 is formed so that the rear circular wall 28 and the front circular wall 34 are detachable. These walls are detached at the time of a maintenance check.

The atomic oven 40 is a device that is an example of the atomic beam generation device, and is a device provided around the distal end of the protruding portion 30.

The atomic beam generation device according to this embodiment includes a temperature adjustment mechanism that adjusts the temperature of the atom source, which is a sample, generates the atomic gas from the atom source by adjusting the temperature of the atom source using the temperature adjustment mechanism, and releases the generated atomic gas through a small hole, thus forming an atomic beam 42. The temperature adjustment mechanism is a heater that is a heating mechanism heating the atom source, or a cooling mechanism (e.g., a Peltier element) cooling the atom source. In a case where an atom source (e.g., strontium, ytterbium or the like) that generates atomic gas by being heated is used, the heater is adopted as the temperature adjustment mechanism. In a case where an atom source (e.g., mercury) that generates atomic gas by being cooled is used, the cooling mechanism is adopted as the temperature adjustment mechanism. Each of the atom sources exemplified here is only an example. The atom source is not thus limited.

For the example shown in FIG. 2, description is given assuming that the atomic oven 40 is adopted as an example of the atomic beam generation device.

The atomic oven 40 causes a heater to heat the atom source, emits atoms from the atom source owing to evaporation through the aperture, and forms the atom beam 42. The beam axis on which the atom beam 42 passes is configured parallel to the Z-axis, and is configured to intersect with the X-axis at a position slightly apart from the origin. The intersecting position corresponds to a trap space 50 that is a minute space where atoms are trapped. The atomic oven 40 is basically provided in the vacuum chamber 20. However, its heat radiator extends to the outside of the vacuum chamber 20 for cooling. The atomic oven 40 heats the atom source to about 750 K, for example.

In this embodiment, the atomic oven 40 includes: a cartridge 200 that includes a holder for accommodating an atom source; and a main body where the cartridge 200 is installed. The cartridge 200 is a unit that is attachable to and detachable from the main body. It is possible to replace and refill with an atom source by taking out the cartridge 200 from the main body of the atomic oven 40. The cartridge 200 will be described later in detail.

The coil 44 for the Zeeman slower is arranged on the downstream side of the beam axis of the atomic oven 40, from the protruding portion 30 to the main body 22 of the vacuum chamber 20. The coil 44 for the Zeeman slower is a device made by integrally including a Zeeman slower that decelerates the atoms of the atom beam 42, and a MOT device that traps the decelerated atoms. Both the Zeeman slower and the MOT device are devices based on an atomic laser cooling technology. The coil 44 for the Zeeman slower is provided with a Zeeman coil used for the Zeeman slower, and one of a pair of MOT coils used for the MOT device, as a series of coils. Although clear classification cannot be made, the large portion from upstream to downstream corresponds to the Zeeman coil that generates a magnetic field contributing to the Zeeman slowing method, and the furthest downstream side corresponds to the MOT coil that generates a gradient magnetic field contributing to the MOT method.

For example, the Zeeman coil is of a decreasing type that has a larger number of turns on the upstream side and a smaller number of turns on the downstream side. The coil 44 for the Zeeman slower is axisymmetrically arranged around the beam axis so that the atom beam 42 can pass through the inside of the Zeeman coil and the MOT coil. In the Zeeman coil, a magnetic field caused to have a spatial gradient is formed, and emission of a Zeeman slower optical beam 82 decelerates atoms.

The optical cavity 46 is a cylindrical component arranged around the Z-axis, and enables formation of an optical lattice therein. Multiple optical components are installed in the optical cavity 46. One pair of optical mirrors on the X-axis, and another pair of optical mirrors parallel thereto are provided, and optical lattice light is multiply reflected between the total of four mirrors, thus generating a bow-tie-shaped optical cavity. The atoms trapped in the trap space 50 is confined in the optical lattice. When the relative frequencies of two optical lattice light beams (clockwise and counterclockwise) caused to enter the optical cavity 46 are shifted, this resonator forms a moving optical lattice that causes the standing wave of the optical lattice to move. The moving optical lattice moves the atoms to the clock transition space 52. In the embodiment, an optical lattice including the moving optical lattice is configured to be formed on the X-axis. Note that it is possible to adopt a two-dimensional or three-dimensional optical lattice with a lattice arranged not only on the X-axis but also on one or both of the Y-axis and the Z-axis. Thus, the optical cavity 46 can be called an optical lattice formation portion forming an optical lattice. The optical cavity 46 is also a device based on atomic laser cooling technology.

The coil 48 for the MOT device generates a gradient magnetic field for the trap space 50. The MOT device emits MOT light beams respectively along three axes, namely the X, Y, and Z axes, in a space where the gradient magnetic field is formed. Accordingly, the MOT device captures atoms in the trap space 50. The trap space 50 is configured on the X-axis. The coil 44 for the Zeeman slower is provided with a Zeeman coil used for the Zeeman slower, and one of a pair of MOT coils used for the MOT device, as a series of coils. In the example shown in FIG. 2, the gradient magnetic field that contributes to the MOT method is generated integrally by the coil 48 for the MOT device and part of the coil 44 for the Zeeman slower.

The cryogenic radiation shield 54 is formed so as to enclose the clock transition space 52, and keeps the inner space at a low temperature. Accordingly, in an inner space, blackbody radiation decreases. The thermal link member 56 also serving as a support structure is attached to the cryogenic radiation shield 54. The thermal link member 56 transfers heat from the cryogenic radiation shield 54 to the cooler 58. The cooler 58 keeps the cryogenic radiation shield 54 at a low temperature via the thermal link member 56. The cooler 58 includes a Peltier element, and cools the cryogenic radiation shield 54 to about 190 K, for example.

The vacuum pump main body 60 and the vacuum pump cartridge 62 are devices for putting the vacuum chamber 20 into a vacuum state. The vacuum pump main body 60 is provided outside of the vacuum chamber 20. The vacuum pump cartridge 62 is provided in the vacuum chamber 20. At the start of activation, the vacuum pump cartridge 62 is heated by a heater provided at the vacuum pump main body 60 and is activated. Accordingly, the vacuum pump cartridge 62 is activated, and absorbs atoms, thus achieving a vacuum.

The physics package 12 is provided with, as components of the optical system: vacuum-tight optical windows 64 and 66 for optical lattice light; a vacuum- tight optical window 68 for MOT light; vacuum- tight optical windows 70 and 72 for Zeeman slower light and MOT light; and optical mirrors 74 and 76.

The vacuum- tight optical windows 64 and 66 for optical lattice light are provided so as to allow entry and emission therethrough of optical lattice light.

The vacuum- tight optical window 68 for MOT light is provided so as to allow entry and emission therethrough of MOT light beams on two axes, among MOT light beams on the three axes used for the MOT device.

The vacuum- tight optical windows 70 and 72 for Zeeman slower light and MOT light are provided so as to allow entry and emission therethrough of Zeeman slower light and MOT light on one axis.

The optical mirrors 74 and 76 are provided so as to change the directions of the Zeeman slower light and the MOT light on the one axis.

The physics package 12 is provided with, as components for cooling: a cooler 90 for an atomic oven; a cooler 92 for a Zeeman slower; and a cooler 94 for a MOT device.

The cooler 90 for the atomic oven is a water-cooling device that dissipates heat flow from the atomic oven 40. The cooler 90 for the atomic oven is provided outside of the vacuum chamber 20, and cools a radiator of the atomic oven 40, the radiator extending outside of the vacuum chamber 20. The cooler 90 for the atomic oven includes a water-cooling tube that is a tube made of metal and is for cooling, and causes cooling water, which is a liquid coolant, to flow in the tube, thus cooling the vacuum chamber 20.

The cooler 92 for the Zeeman slower is a device that is provided on the wall part of the vacuum chamber 20, and cools the coil 44 for the Zeeman slower. The cooler 92 for the Zeeman slower includes a tube made of a metal, and causes cooling water to flow in the tube, thus removing Joule heat generated at the coil 44 for the Zeeman slower.

The cooler 94 for the MOT device is a heat radiator provided on the circular wall part of the vacuum chamber 20. At the coil 48 for the MOT device, Joule heat is generated, although the Joule heat is smaller in amount (e.g., about 1/10) than that of the cooler 92 for the Zeeman slower. Accordingly, the metal of the cooler 94 for the MOT device extends to the outside of the vacuum chamber 20 from the coil 48 for the MOT device, and radiates heat to the atmosphere.

The physics package 12 is provided with, as components for correcting a magnetic field: a triaxial magnetic field correction coil 96; a vacuum-tight electric connector 98; an magnetic field compensation coil 102 for a thermoelectric cooler ; and an magnetic field compensation coil 104 for the atomic oven.

The triaxial magnetic field correction coil 96 is a coil to compensate for perfectly zero uniform magnetic field in the clock transition space 52. The triaxial magnetic field correction coil 96 is formed to have a three-dimensional shape so as to correct the magnetic field on the three axes, namely the X, Y, and Z axes. For example, the triaxial magnetic field correction coil 96 is formed to have a substantially cylindrical shape as a whole. Each of coils constituting the triaxial magnetic field correction coil 96 is formed to have a point-symmetric shape centered in the clock transition space 52 in each axis direction.

The vacuum- tight electric connector 98 is a connector for supplying electric power to the inside of the vacuum chamber 20, and is provided on the circular wall part of the vacuum chamber 20. From the vacuum- tight electric connector 98, power is supplied to the coil 44 for the Zeeman slower, the coil 48 for the MOT device, and the triaxial magnetic field correction coil 96.

The individual magnetic field compensation coil 102 for the thermoelectric cooler is a coil for compensating the stray magnetic field from the cooler 58 that cools the cryogenic radiation shield 54. The Peltier element included in the cooler 58 is a large current device where relatively large current flows, and generates a large magnetic field. Around the Peltier element, the magnetic field is shielded by a high permeability material. However, shielding is not completely achieved, and part of the magnetic field leaks. Accordingly, the magnetic field compensation coil 102 for the thermoelectric cooler is configured so as to compensate the stray magnetic field in the clock transition space 52.

The individual magnetic field compensation coil 104 for the atomic oven is a coil for compensating the stray magnetic field from the heater of the atomic oven 40. The heater of the atomic oven 40 is also a large current device, and the stray magnetic field cannot be ignored in some cases even with shielding by a high permeability material. For example, even in a case where a heater circuit is made of noninductive winding, an induced component actually remains, in wiring via a wiring terminal and an insulating layer. For example, even if the atomic oven 40 is covered with a high permeability material to facilitate magnetic shielding, a part such as an opening of the atom beam cannot actually be covered, and remains. Accordingly, the magnetic field compensation coil 104 for the atomic oven is configured so as to compensate the stray magnetic field in the clock transition space 52.

Hereinafter, the operation of the physics package 12 will be described. In the physics package 12, the vacuum pump cartridge 62 included in the vacuum chamber 20 absorbs atoms, thus putting the inside of the vacuum chamber 20 into a vacuum state. Accordingly, for example, the inside of the vacuum chamber 20 is in a vacuum state of about 10⁻⁸ Pa, which eliminates the effect of air components, such as nitrogen and oxygen.

In the atomic oven 40, the atom source is heated by the heater and the atomic gas is generated accordingly, and the atomic gas sequentially passes through the aperture , is collimated and oriented. Thus, the atomic beam 42 is formed. The atomic oven 40 is installed so as to form the atom beam 42 on the beam axis parallel to the Z-axis. Note that in the atomic oven 40, the main body of the atomic oven 40 is heated by the heater. However, the main body of the atomic oven 40 and a joint that supports this main body are thermally insulated via a thermal insulator. Furthermore, a joint connected to the physics package 12 is cooled by the cooler 90 for the atomic oven, thus preventing the physics package 12 from being affected by a high temperature, or reducing the adverse effect of the high temperature.

In a case where an atom source (e.g., mercury) that generates atomic gas by being cooled is used, the atom source is cooled by a cooling mechanism (e.g., a Peltier element) and the atomic gas is generated accordingly, and the atomic gas is collimated and oriented. Thus, the atomic beam 42 is formed.

The coil 44 for the Zeeman slower is installed so as to be axisymmetrical with respect to the beam axis. The inside of the coil 44 for the Zeeman slower is irradiated with the Zeeman slower optical beam 82 and the MOT optical beam 84 on one axis. The Zeeman slower optical beam 82 enters from the vacuum-tight optical window 70 for Zeeman slower light and MOT light, and is reflected by the optical mirror 74 installed downstream of the beam away from the coil 48 for the MOT device. Accordingly, the Zeeman slower optical beam 82 is overlaid on the atom beam 42, and travels upstream of the beam axis parallel to the beam axis. In this process, owing to the effect of the Zeeman splitting proportional to the intensity of the magnetic field and the effect of the Doppler shift, the atoms in the atom beam 42 absorb the Zeeman slower light, are given momentum in the deceleration direction, and are decelerated. The Zeeman slower light is reflected upstream of the coil 44 for the Zeeman slower by the optical mirror 76 disposed aside of the beam axis, and is emitted through the vacuum-tight optical window 72 for Zeeman slower light and MOT light. Note that the coil 44 for the Zeeman slower generates Joule heat. However, cooling is performed by the cooler 92 for the Zeeman slower. Accordingly, the temperature is prevented from being high.

The sufficiently decelerated atom beam 42 reaches the MOT device that includes the MOT coil on the furthest downstream side of the coil 44 for the Zeeman slower, and the coil 48 for the MOT device. In the MOT device, a magnetic field having a linear spatial gradient is formed centered in the trap space 50. The MOT device is irradiated with MOT light in the three-axis directions, on the positive and negative sides.

The MOT optical beam 84 in the Z-axis direction is emitted in the negative direction of the Z-axis, and is then reflected outside of the vacuum-tight optical window 72 for Zeeman slower light and MOT light, thus also being emitted in the positive direction of the Z-axis. MOT optical beams on the remaining two axes are emitted into the MOT device through the vacuum- tight optical window 68 for MOT light and by an optical mirror, not shown.

In the MOT device, the atom beam receives a restoring force centered in the trap space 50 by the magnetic field gradient and is decelerated. Accordingly, the atoms is trapped in the trap space 50. Note that the position of the trap space 50 can be finely adjusted by adjusting the offset values for the magnetic field to be generated by the triaxial magnetic field correction coil 96. The Joule heat generated at the coil 48 for the MOT device is dissipated outside of the vacuum chamber 20 by the cooler 94 for the MOT device.

An optical lattice light beam 80 enters in the X-axis direction through the vacuum-resistant optical window 64 for optical lattice light toward the vacuum-resistant optical window 66 for optical lattice light. On the X-axis, the optical cavity 46 including two optical mirrors is installed, and causes reflection. Accordingly, on the X-axis there is formed an optical lattice potential with a series of standing waves in the X-axis direction in the optical cavity 46. The atoms is captured by the optical lattice potential.

The optical lattice can be moved along the X-axis by slightly changing the wavelength. By movement means through the moving optical lattice, the atoms is moved to the clock transition space 52. As a result, the clock transition space 52 is apart from the beam axis of the atom beam 42. Accordingly, the effects of blackbody radiation emitted from the atomic oven 40 at a high temperature can be removed. The clock transition space 52 is enclosed by the cryogenic radiation shield 54, and is shielded from blackbody radiation emitted from ambient materials at ordinary temperatures. In general, blackbody radiation is proportional to the fourth power of the absolute temperature of a material. Accordingly, reduction in temperature by the cryostat reservoir 54 exerts a large advantageous effect of removing the impact of the blackbody radiation.

In the clock transition space 52, atoms are irradiated with laser light whose optical frequency is under control, highly accurate spectroscopy of clock transitions (i.e., resonance transitions of atoms serving as the reference of the clock) is performed, and the frequency that is specific to the atom and invariant is measured. Thus, an accurate atomic clock is achieved. Improvement of the accuracy of the atomic clock requires removal of perturbation around the atoms, and the frequency being accurately read. It is particularly important to remove the frequency shift caused by the Doppler effect due to the thermal motion of the atoms. In the optical lattice clock, the atom movement is frozen by confining the atoms in a space sufficiently smaller than the wavelength of the clock laser using the optical lattice created by interference of the laser light. Meanwhile, in the optical lattice, the frequencies of atoms are shifted by laser light that forms the optical lattice. For the optical lattice light beam 80, a specific wavelength or frequency called "magic wavelength" or "magic frequency" is selected, which removes the effects of the optical lattice on the resonant frequency.

Furthermore, the clock transitions are also affected by a magnetic field. Atoms in the magnetic field cause Zeeman splitting dependent on the intensity of the magnetic field. Accordingly, the clock transitions cannot be accurately measured. In the clock transition space 52, the magnetic field must be to compensate for perfectly zero and uniform magnetic field. First, a stray magnetic field caused by the Peltier element of the cooler 58 is dynamically compensated by the magnetic field compensation coil 102 for the thermoelectric cooler that generates a compensation magnetic field dependent on the intensity of the stray magnetic field. Likewise, it is configured so that the stray magnetic field caused by the heater of the atomic oven 40 can be dynamically compensated by the magnetic field compensation coil 104 for the atomic oven. Note that for the coil 44 for the Zeeman slower and the coil 48 for the MOT device, the current signal is turned off at the time of measurement of the frequency of clock transition, and energization is not performed, thus preventing effects of the magnetic field. The magnetic field of the clock transition space 52 is further corrected by the triaxial magnetic field correction coil 96. The triaxial magnetic field correction coil 96 includes multiple coils in each axis, and can remove not only uniform components of the magnetic field but also spatially varying components.

Thus, in the state where the disturbances are removed, the atoms is urged to be subjected to clock transition by laser light. Light emitted as a result of the clock transition is received by the optical system device, subjected to a spectroscopic process and the like by the control device, and the frequency is obtained.

Hereinafter, the atomic beam generation device will be described in detail.

### <Atomic beam generation device according to Example 1>

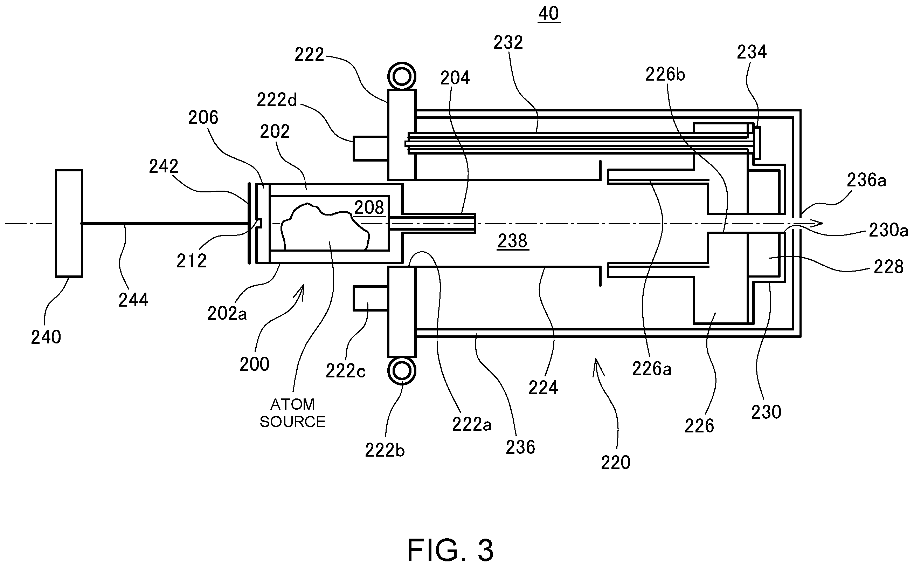

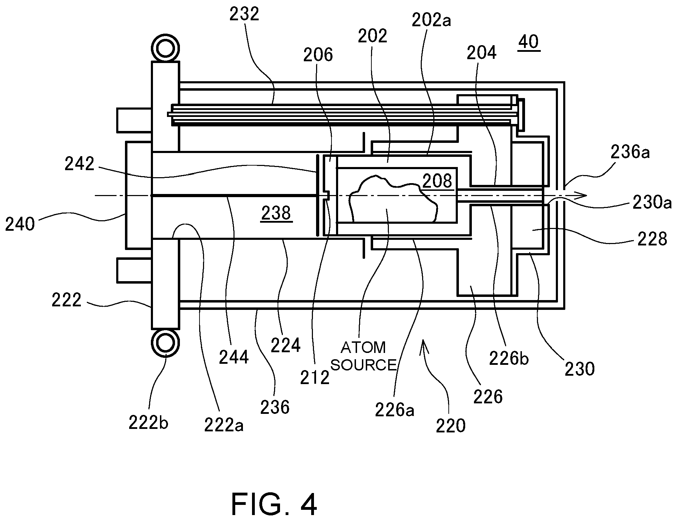

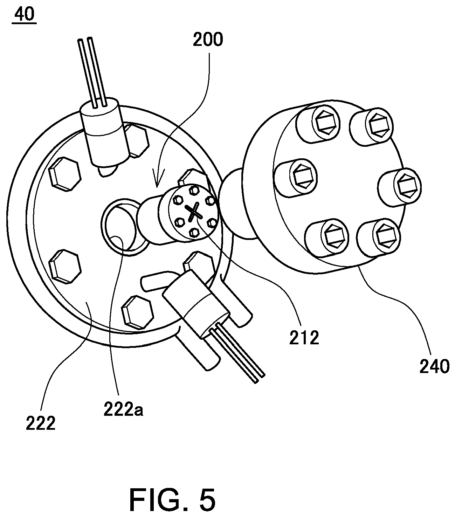

With reference to FIGS. 3 to 5, an atomic beam generation device according to Example 1 will be described. FIGS. 3 to 5 show the atomic oven 40, which is an example of an atomic beam generation device. FIG. 3 is a sectional view of the atomic oven 40. FIG. 4 is a sectional view of the atomic oven 40. FIG. 5 is an exploded perspective view of the atomic oven 40. Note that FIG. 5 only shows part of the atomic oven 40 (e.g., the cartridge 200 and a flange 222).

The atomic oven 40 includes the cartridge 200, and a main body 220 where the cartridge 200 is installed.

The cartridge 200 includes a holder 202, a capillary nozzle 204 and a cover 206.

The holder 202 is, for example, a member that has a cylindrical shape. In the holder 202, a sample chamber 208 that has a space is formed. In the sample chamber 208, an atom source serving as a sample is installed. The atom source is thus accommodated in the holder 202. A threaded groove 202a is formed on the outer peripheral surface of the holder 202. The threaded groove 202a is a groove that meshes with a threaded groove 226a formed in an inner peripheral surface of a housing 226 that will be described later. As described later, meshing between the threaded grooves 202a and 226a fixes the cartridge 200 to the housing 226.

The capillary nozzle 204 is a cylindrical member that has a smaller diameter than the holder 202 does. The capillary nozzle 204 is a member that is provided on one side of the holder 202, and extends from the one end. For example, the holder 202 and the capillary nozzle 204 are integrated into one member. The insides of the sample chamber 208 and the capillary nozzle 204 are connected. Atomic gas generated from the atom source in the sample chamber 208 is emitted as the atomic beam 42 to the outside of the atomic oven 40 through the capillary nozzle 204.

The cover 206 is a member detachably provided on the other end of the holder 202 by means of a screw. By taking out the cover 206 from the holder 202, the sample chamber 208 is opened, thus allowing the atom source to be installed in the sample chamber 208.

As the atom source, for example, an atom source, such as strontium or ytterbium, which generates atomic gas by being heated, is used. It is a matter of course that an atom source other than such atom sources may be used.

In the surface of the cover 206, a groove 212 is formed. The groove 212 has a shape into which a flathead screwdriver can be inserted. Specifically, the groove 212 is a linear groove, or a cross-shaped groove (e.g., a groove including two linear grooves intersecting with each other).

The main body 220 includes a flange 222, a thermal radiation shield 224, a housing 226, a button heater 228, a cover 230, a thermal insulation tube 232, a rod 234, a thermal radiation shield 236, and a temperature sensor that measures the temperature in the sample chamber 208 in the holder 202. These members are arranged in a portion in a vacuum (vacuum side) in the physics package 12.

The flange 222 is a vacuum flange (e.g., an ICF70 flange) for attaching the atomic oven 40 to the physics package 12. With respect to the flange 222 as a boundary, one side is a vacuum side, and the other side is an atmosphere side. That is, in a case where the flange 222 is attached to the physics package 12, each member described above (the thermal radiation shield 224 etc.) is arranged on the vacuum side.

An access port 222a that is a hole penetrating through the flange 222 in its thickness direction is formed in the flange 222. The access port 222a is a hole for allowing the cartridge 200 to be inserted into and taken out of the main body 220, on the atmosphere side that is the outside of the flange 222, and has a larger diameter than the holder 202 does.

The flange 222 is appropriately provided with a flow path 222b through which coolant flows, and vacuum hermetic seal connectors 222c and 222d that can electrically connect the vacuum side and the atmosphere side to each other. The connector 222c is a connector for the button heater 228. One end of a lead for the button heater 228 is connected to the connector 222c. The other end of the lead is connected to the button heater 228. The connector 222d is a connector connected to the temperature sensor.

With reference to the position of the flange 222, the thermal radiation shield 224, the housing 226 and the button heater 228 are arranged in order from the side of the flange 222.

The thermal radiation shield 224 has, for example, a cylindrical shape, and is provided on the flange 222. The thermal radiation shield 224 is, for example, a member made of SUS (stainless steel). The thermal radiation shield 224 is provided on the flange 222 in conformity with the position of the access port 222a of the flange 222. A pathway 238 that is a space is formed in the cylindrical thermal radiation shield 224. The pathway 238 is a space through which the cartridge 200 inserted into the main body 220 from the access port 222a is passes. The pathway 238 has a shape conforming to the external shape of the holder 202. The size (e.g., diameter) of the pathway 238 is slightly larger than the size (e.g., diameter) of the holder 202. Thus, the pathway 238 has a shape and size allowing the holder 202 to be inserted. The cartridge 200 is inserted through the pathway 238 to the housing 226, and is supported by the housing 226.

The housing 226 is a member that supports the cartridge 200 on one side (thermal radiation shield 224 side), and supports the button heater 228 on the other side (the opposite side of the thermal radiation shield 224). The housing 226 corresponds to an example of an installation portion. The housing 226 is, for example, a member made of SUS. The one side of the housing 226 has a shape conforming to the shape (e.g., a cylindrical shape) of the holder 202 of the cartridge 200. Part or the entirety of the holder 202 is installed in the portion having this shape. In the example shown in FIG. 4, part of the holder 202 is installed on the one side of the housing 226, and is supported by the housing 226.

In the inner surface of the housing 226 on the one side, the threaded groove 226a is formed. The threaded groove 226a has a shape meshing with the threaded groove 202a formed in the outer peripheral surface of the holder 202.

In a bottom portion of the housing 226, a small hole 226b penetrating through the bottom portion from the one side to the other side is formed. The capillary nozzle 204 of the cartridge 200 is inserted into the hole 226b, and penetrates through the bottom portion of the housing 226.

The button heater 228 is an example of the temperature adjustment mechanism that heats the sample chamber 208 in the holder 202. In the example shown in FIG. 4, the button heater 228 is provided around the distal end of the capillary nozzle 204 so as not to cover the opening at the distal end of the capillary nozzle 204. Accordingly, the temperature at the distal end of the capillary nozzle 204 is higher than the temperature of the sample chamber 208. The installation position of the button heater 228 is thus defined so as to form a temperature gradient from the capillary nozzle 204 to the sample chamber 208.

The cover 230 is provided so as to cover the button heater 228. A hole 230a is formed in the cover 230 at the position conforming to the position of the hole 226b in the housing 226. The distal end of the capillary nozzle 204 is inserted into the hole 230a.

At a position outside of the thermal radiation shield 224 and the housing 226, from the installation position of the button heater 228 to the flange 222, the thermal insulation tube 232 and the rod 234 are installed. One end of the thermal insulation tube 232 and one end of the rod 234 are connected (for example, fixed) to the cover 230 of the button heater 228. The other ends of the thermal insulation tube 232 and the rod 234 are connected (for example, fixed) to the flange 222. The thermal insulation tube 232 has a cylindrical shape. The rod 234 is installed in this tube. The thermal insulation tube 232 is made of magnesium oxide, for example. The rod 234 is a member made of steel, for example. Portions to be heated (e.g., the button heater 228 and the cover 230) are mechanically supported by the thermal insulation tube 232 and the rod 234, and the heat in these portions to be heated is prevented from flowing to the outside.

The thermal radiation shield 236 is a member that covers the thermal radiation shield 224, the housing 226, the button heater 228, the cover 230, the thermal insulation tube 232 and the rod 234. The thermal radiation shield 236 is a member made of aluminum, for example. In the bottom portion of the thermal radiation shield 236, at a position conforming to the hole 226b of the housing 226 and the hole 230a of the cover 230, i.e., a position conforming to the distal end of the capillary nozzle 204 of the cartridge 200 installed in the housing 226, a hole 236b penetrating through the bottom portion is formed.

On the atmosphere side of the flange 222 (i.e., the opposite side of the vacuum side where the thermal radiation shield 224 and the like are installed), a flange 240 (e.g., an ICF34 flange) is installed. The flange 240 is attached to the atmosphere side of the flange 222 so as to cover the access port 222a of the flange 222. By attaching the flange 240 to the flange 222, the access port 222a is blocked.

A rod 244 having a columnar shape is fixed to one surface of the flange 240 (i.e., a surface facing the flange 222). A thermal radiation shield 242 having a disk shape is fixed to the distal end of the rod 244. The diameter of the thermal radiation shield 242 is smaller than the diameter of the access port 222a and the diameter of the pathway 238. The thermal radiation shield 242 and the rod 244 are members made of SUS, for example.

Hereinafter, operation of installing the cartridge 200 in the main body 220 of the atomic oven 40 will be described.

In a state where the main body 220 of the atomic oven 40 is attached to the physics package 12, the vacuum side of the atomic oven 40 is filled with inert gas (N2, Ar, and so on) up to a normal pressure, and the flange 240 is detached from the flange 222. Accordingly, the inside of the pathway 238 is exposed to the atmosphere through the access port 222a.

Next, the cartridge 200, where the atom source is accommodated in the sample chamber 208, is inserted into the pathway 238 through the access port 222a and then inserted into the housing 226 through the pathway 238. For example, a flathead screwdriver is applied to the groove 212 of the cartridge 200, and the cartridge 200 is inserted into the housing 226 with the cartridge 200 being rotated by the flathead screwdriver. As a result of the rotation, the thread groove 202a formed in the outer peripheral surface of the holder 202 meshes with the thread groove 226a formed in the inner peripheral surface of the housing 226, thus allowing the cartridge 200 to be fixed to the housing 226 and supported by the housing 226.

The capillary nozzle 204 of the cartridge 200 penetrates through the hole 226b of the housing 226 and is then inserted into the hole 230a of the cover 230 of the button heater 228. Accordingly, the distal end of the capillary nozzle 204 is disposed at a position conforming to the hole 236a of the thermal radiation shield 236.

Next, the flange 240 is attached to the flange 222. Thus, the access port 222a is blocked with the flange 240. By making the inside of the physics package 12 a vacuum, the pathway 238 and the sample chamber 208 are maintained at a vacuum.

The atom source accommodated in the sample chamber 208 is heated by the button heater 228, thus generating atomic gas from the atom source. The atomic gas passes through the capillary nozzle 204, is collimated, oriented and is emitted from the hole 236a of the thermal radiation shield 236 to the vacuum side that is the outside of the atomic oven 40. Thus, the atomic beam 42 is formed (see FIG. 2).

Since the button heater 228 is provided around the distal end of the capillary nozzle 204, the temperature at the distal end of the capillary nozzle 204 is higher than the temperature in the sample chamber 208. This can restrain or prevent the atomic gas generated in the sample chamber 208 from clogging the capillary nozzle 204.

To detach the cartridge 200 from the main body 220 of the atomic oven 40, the vacuum portion of the atomic oven 40 is filled with inert gas up to a normal pressure, and then the flange 240 is detached from the flange 222. Next, the flathead screwdriver is inserted into the pathway 238 through the access port 222a, applied to the groove 212 of the cartridge 200 and rotated, thus taking out the cartridge 200 through the access port 222a.

The operation described above enables replacement with the atom source. The cartridge 200 is a component independent of the components constituting the main body 220 of the atomic oven 40. Consequently, after the main body 220 of the atomic oven 40 is attached to the physics package 12, only detachment of the flange 240 provided on the atmosphere side enables the cartridge 200 to be inserted into and taken out from the main body 220. That is, the flange 222 is detached from the physics package 12 but the main body 220 is left undetached from the physics package 12, and the atom source can be replaced. Since the flange 222 is not required to be detached from the physics package 12, the flange 222 can be fixed to the physics package 12 by welding or the like. As a result, this contributes to reduction in size and cost and mass production of the atomic oven 40.

Note that the heat insulation performance of the button heater 228 depends not only on heat flow from each thermal radiation shields to room temperature side, but also on the thermal conductivities, diameters and lengths of the thermal insulation tube 232 and the rod 234 that connect a high-temperature side and a room-temperature side. For example, each member is designed so that portions of the thermal insulation tube 232 and the rod 234 that support the portion to be heated can be separated from the room-temperature side, and the lengths of the portions can be made as long as possible.

The outer peripheral surface of the holder 202 and the inner peripheral surface of the housing 226 may be plated with a metal, such as silver or molybdenum. For example, the threaded grooves 202a and 226a are plated. Accordingly, even when the holder 202 and the housing 226 are heated by the button heater 228, the cartridge 200 can be attached to the housing 226 and detached from the housing 226 by being smoothly rotated.

Note that according to the aforementioned Example 1, the case is described where the button heater 228 is used as the temperature adjustment mechanism, and the atom source that generates atomic gas by being heated (e.g., strontium, ytterbium, etc.) is used as the atom source. According to another example, a cooling mechanism, such as a Peltier element, may be used as the temperature adjustment mechanism, and an atom source (e.g., mercury or the like) that generates atomic gas by being cooled may be used as the atom source. Also in this case, the atom source can be replaced in accordance with the operation described above,.

### <Atomic beam generation device according to Example 2>

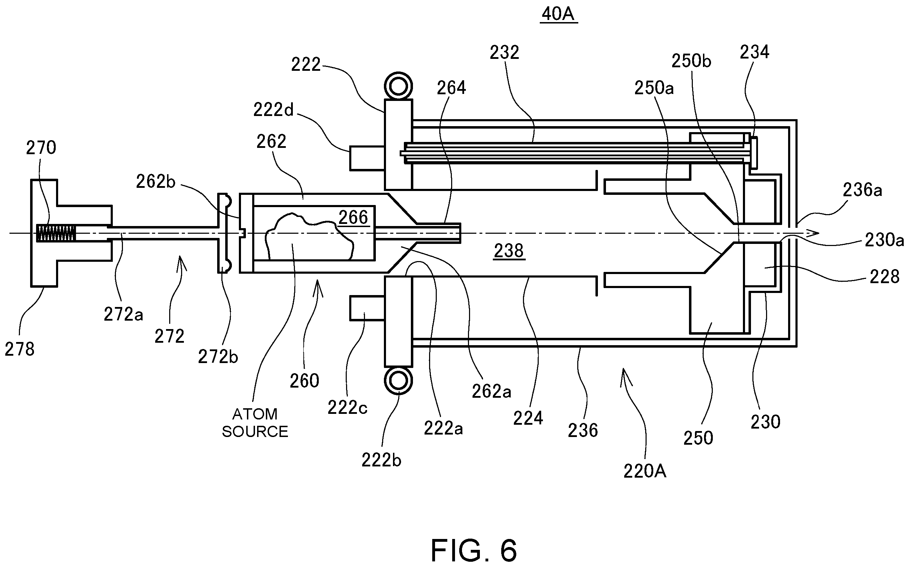

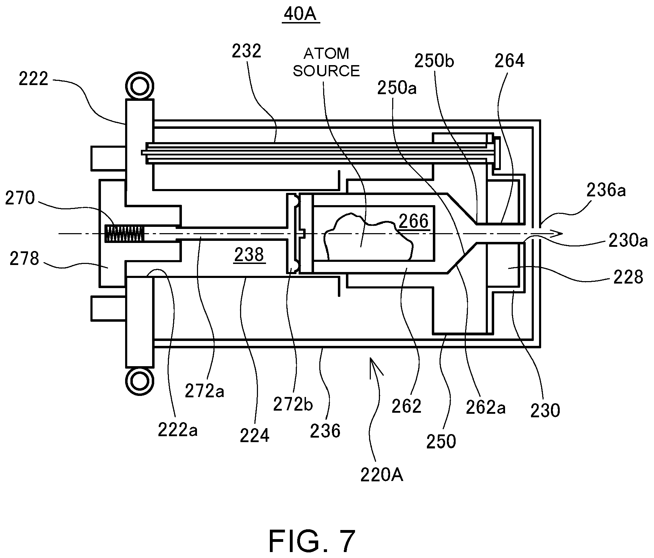

With reference to FIGS. 6 and 7, the configuration of an atomic beam generation device according to Example 2 will be described. FIGS. 6 and 7 show the atomic oven 40A, which is an example of an atomic beam generation device. FIG. 6 is a sectional view of the atomic oven 40A. FIG. 7 is a sectional view of the atomic oven 40A. In Example 2, instead of the atomic oven 40, the atomic oven 40A is installed for the physics package 12.

The atomic oven 40A includes a cartridge 260, and a main body 220A where the cartridge 260 is installed. According to Example 2, instead of the cartridge 200 in Example 1, the cartridge 260 is used, and instead of the main body 220 in Example 1, the main body 220A is used.

The main body 220A includes a housing 250 instead of the housing 226 in Example 1. Except for the housing 250, the main body 220A has the same configuration as the configuration of the main body 220 in Example 1. Note that in the bottom portion of the housing 250, a hole 250b is formed, similar to the hole 226b in the housing 226.

The cartridge 260 includes a holder 262 and a capillary nozzle 264.

Similar to Example 1, a sample chamber 266 is formed in a space in the holder 262. In the sample chamber 266, an atom source serving as a sample is installed.

Similar to Example 1, the capillary nozzle 264 is provided at one end of the holder 262. In Example 2, a surface 262a that is part of the outer peripheral surface of the holder 262 is formed to have a tapered shape toward the capillary nozzle 264. An inner peripheral surface 250a of the housing 250 where the holder 262 is to be installed is formed to have a flared shape in conformity with the outer peripheral surface of the holder 262. Preferably, these surfaces are formed to have the tapered and flared shapes in consideration of the mechanical processing accuracy. It is a matter of course that similar to Example 1, the surface 262a of the holder 262 and the inner peripheral surface 250a of the housing 250 are not necessarily formed to have such tapered and flared shapes.

Example 2 uses a press mechanism that pushes the cartridge 260 installed in the housing 250 toward the housing 250 from the access port 222a side. For example, the press mechanism pushes the cartridge 260 toward the housing 250 using a spring, such as a coil spring, and presses the cartridge 260 against the housing 250, thus fixing the cartridge 260 to the housing 250. Hereinafter, the press mechanism will be described.

The press mechanism includes, for example, a coil spring 270, a plunger 272 and a flange 278.

The plunger 272 includes a rod 272a, and a disk-shaped disk portion 272b fixed to one end of the rod 272a. The disk portion 272b is a thermal radiation shield, and is a member to be pressed against a bottom surface 262b of the holder 262. The coil spring 270 to be accommodated in a groove formed in the flange 278 is arranged on the other end of the rod 272a.

Hereinafter, operation of installing the cartridge 260 in the main body 220A of the atomic oven 40A will be described.

In a state where the main body 220A of the atomic oven 40A is attached to the physics package 12, the vacuum side of the atomic oven 40 is returned to the atmosphere, and the flange 278 is detached from the flange 222.

Next, the cartridge 260, where a sample, i.e., an atom source, is accommodated in the sample chamber 266, is inserted into the pathway 238 through the access port 222a. In a state where the coil spring 270 is accommodated in the groove of the flange 278 and the other end of the rod 272a is inserted in the groove, the flange 278 is attached to the flange 222. Thus, the disk portion 272b of the plunger 272 is in contact with the bottom surface 262b of the holder 262 of the cartridge 260. Furthermore, the disk portion 272b is pressed against the bottom surface 262b of the holder 262 by the elastic spring force of the coil spring 270. The cartridge 260 is pressed toward the housing 250 by the elastic spring force, and is fixed to the housing 250.

Note that the natural length of the coil spring 270 is possibly reduced owing to exposure to a high temperature. Preferably, the coil spring 270 is attached to a site that can be kept at a room temperature as much as possible.

The holder 262 is being heated by the button heater 228. The disk portion 272b of the plunger 272 is in contact with the bottom surface 262b of the holder 262 that is being heated. Preferably, the contact area between the disk portion 272b and the bottom surface 262b of the holder 262 is small, in order to reduce the thermal flow from the holder 262 to the plunger 272 as much as possible. For example, three protruding portions are provided on a surface of the disk portion 272b that is in contact with the bottom surface 262b. The plunger 272 may be configured so that the three protruding portions can be in contact with the bottom surface 262b. Such reduction in the number of contact points reduces the contact area, which can in turn reduce the thermal flow rate from the holder 262 to the plunger 272.

According to Example 2, similar to Example 1, the flange 222 is detached from the physics package 12 but the main body 220A is left undetached from the physics package 12, and the atom source can be replaced.

A cooling mechanism, such as a Peltier element, may be used as the temperature adjustment mechanism, and an atom source that generates atomic gas by being cooled may be used as the atom source. Also in this case, the atom source can be replaced without detaching the main body 220A from the physics package 12.

The temperature distribution of the atomic oven after a power of 9 W is applied to the button heater 228 by the atomic oven according to Examples 1 and 2 and a stationary state is achieved, is simulated. Piping for cooling water is wound around the side surface of the flange 222, and the flange 222 is assumed to be maintained at a room temperature, as a boundary condition. The thermal insulation tube and each thermal radiation shield function, thereby allowing the housing and the sample chamber to have uniform high-temperature spaces having small thermal gradients at a desired temperature.

The displacement of the atomic oven when a force eight times as strong as the gravity on the earth's surface is applied in a direction orthogonal to the longitudinal-directional axis (Z-axis in FIG. 2) of the atomic oven is simulated. If the deviation is large, the atomic beam is deflected and is possibly incapable of being emitted in a desired direction and to a desired position. According to a result of a simulation, even when the force described above is applied in the direction orthogonal to the Z-axis, the displacement remains 1 µm or less owing to the strengths of the thermal insulation tube 232, the rod 234 and the like, thus confirming that there is no problem in view of using the atomic oven.

### <Atomic beam generation device according to Example 3>

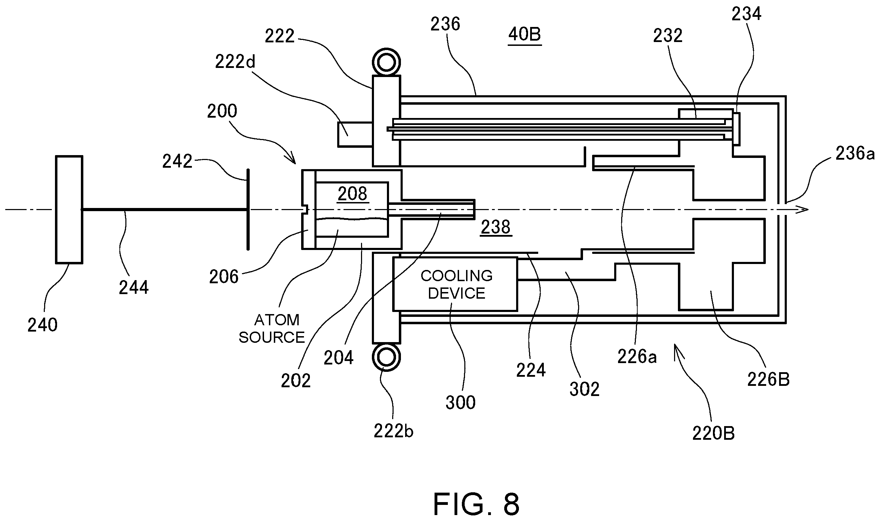

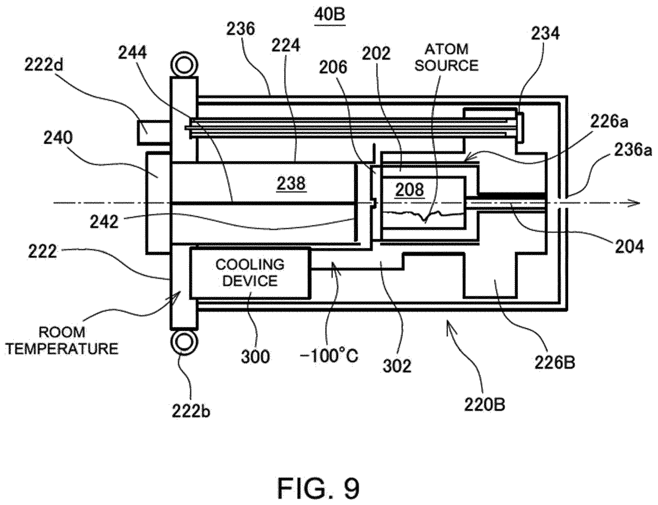

With reference to FIGS. 8 and 9, an atomic beam generation device according to Example 3 will be described. FIGS. 8 and 9 show an example of the atomic beam generation device. FIG. 8 is a sectional view of the atomic beam generation device 40B. FIG. 9 is a sectional view of the atomic beam generation device 40B. In Example 3, instead of the atomic oven 40, the atomic beam generation device 40B is installed in the physics package 12.

The atomic beam generation device 40B includes: the same cartridge 200 as that in Example 1; and a main body 220B where the cartridge 200 is installed.

The main body 220B includes a housing 226B instead of the housing 226 in Example 1. In Example 1, the button heater 228 is installed in the main body 220. In Example 3, instead of the button heater 228, a cooling device 300 is installed in the main body 220. A thermal link member 302 extends from the housing 226B to the cooling device 300. The housing 226B and the cooling device 300 are thus connected to each other by the thermal link member 302. Accordingly, the housing 226B is cooled by the cooling device 300 through the thermal link member 302. Except for the housing 226B and the cooling device 300, the main body 220B has the same configuration as the configuration of the main body 220 in Example 1.

Similar to Example 1, a sample chamber 208, which is a space, is formed in the holder 202 of the cartridge 200. In the sample chamber 208, an atom source serving as a sample is installed. In Example 3, for example, as an atom source, mercury atoms (e.g., liquid mercury) are installed in the sample chamber 208.

In Example 1, heat flows to the atom source from the button heater 228 through the housing 226 and the holder, and the atom source is heated. In Example 3, heat is absorbed from the atom source by the cooling device 300 through the housing 226 and the thermal link member 302, and the atom source is cooled.

For example, mercury atoms are subjected to smaller adverse effects due to blackbody radiation than strontium atoms and ytterbium atoms described above, and are promising to increase the accuracy of the optical lattice clock. Mercury has a low melting point that is -40°C, and is liquid at an ordinary pressure and room temperature. Under vacuum, the vapor pressure is relatively high at room temperature. Preferably, the atom source is cooled and solidified and the vapor pressure is reduced in order to suppress the flow rate of atoms emitted from the atomic beam generation device 40B under vacuum to an appropriate rate, in a case where mercury is used as an atom source.

Example 3, where the atom source can be simply attached and detached and the temperature of the atom source can be reduced during operation, is suitable to an atomic beam generation device for atoms, such as mercury atoms, having a high vapor pressure at room temperature.

A specific example of the cooling device 300 is a Peltier element. The Peltier element causes a current to flow to a contact point between two or more types of component metals, thus facilitating the thermal flow from one surface of the contact to the opposite surface. As a result, an object in contact with one side can be cooled. Specifically, the cooling surface of the Peltier element is connected to the thermal link member 302, and the other surface is connected to the flange 222, thus allowing the atom source to be cooled through the thermal link member 302 and the housing 226B. The current is supplied through the connector. Cooling water flows through the flow path 222b provided in the flange 222, thus allowing the generated heat in the Peltier element to be exhausted. Preferably, the cooling capability of the Peltier element is high to an extent capable of cooling the entire housing 226B through the thermal link member 302. Even if the capillary nozzle 204 apart from the Peltier element is not sufficiently cooled to a certain extent, waste of the atom source is suppressed, the capillary nozzle 204 is not likely to be blocked and no problem is caused provided that part of the atom source close to the Peltier element can be cooled and the vapor pressure of the atom source can be appropriately suppressed.

Preferably, the thermal contact between the housing 226B and the holder 202 of the cartridge 200 is configured to be much stronger in the case of cooling the atom source than in the case of heating the atom source. This is because thermal conduction due to relatively large thermal radiation at a high temperature can be expected, while at a low temperature the thermal radiation cannot be expected and thermal conduction through the contact surface is dominant. Consequently, for example, in the case of screw-type contact, a joint with an increased contact area, such as a fine screw, in comparison with that of a normal screw, is preferable. For example, in the case of contact using surface contact and contact using an elastic screw as in Example 2, a strong joint due to reduction in the surface roughness and increase in spring constant is preferable.

In the case where mercury is used as the atom source in the atomic beam generation device 40B, it should be noted that liquid mercury accommodated in the sample chamber 208 of the cartridge 200 is required to be of an appropriate amount so as not to block the capillary nozzle 204. Attention should be paid to the attitude of the cartridge 200 so that the capillary nozzle 204 is oriented above during operation of attaching and detaching the cartridge 200 and during storage of the cartridge 200.

### <Method of managing cartridges 200 and 260>

Hereinafter, a method of managing the cartridges 200 and 260 will be described. Hereinafter, a method of managing the cartridge 260 will be described as an example. However, the cartridge 200 can be managed by a similar method.

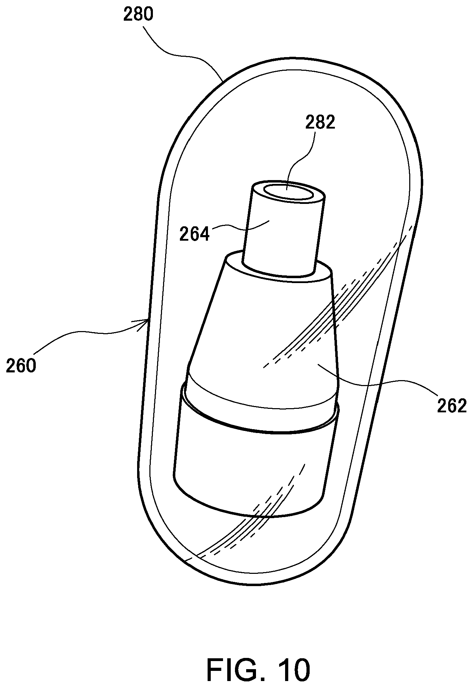

With reference to FIG. 10, the method of managing the cartridge 260 will be described. FIG. 10 is a perspective view of the cartridge 260.

In a case where strontium or the like is used as an atom source, possible exposure of the atom source to the atmosphere for a long time oxidizes the atom source and makes it deteriorate. To prevent such deterioration, the sample chamber 266 in the holder 262 of the cartridge 260 is filled with an atom source, the bottom lid of the holder 262 is closed, and the cartridge 260 is accommodated in a glass tube 280. Inside of the glass tube 280 is made into a vacuum. After creating the vacuum, the inside of the glass tube 280 is purged with an inert gas. Note that the cartridge 260 may be accommodated in a vacuum package or the like made up of a plastic bag or the like instead of the glass tube 280. Thus, the cartridge 260 itself accommodating the atom source is stored in a vacuum or an inert gas atmosphere.

Note that it is assumed that the cartridge 260 will not be repetitively used, and is assumed to be disposable. Typically, components constituting the cartridge 260 are more inexpensive than the components constituting the main body 220A. It is advantageous in view of fabricating and maintaining a product to permanently use the main body 220A including components that are expensive and difficult to be processed, and to replace the entire cartridge 260 that is an inexpensive component and accompanied by the atom source to be consumed.

In the case of using the cartridge 260, at a stage where preparation of the optical lattice clock 10 is completed, the flange 278 is detached from the flange 222, the cartridge 260 is taken out from the glass tube 280, the cartridge 260 is installed in the main body 220A of the atomic oven 40A, the flange 278 is attached to the flange 222, and creating a vacuum in the physics package 12 is started.

As described above, the cartridge 260 itself that accommodates the atom source is stored in a vacuum or an inert gas atmosphere. Accordingly, oxidization of the atom source can be restrained or prevented.

The capillary nozzle 264 may be sealed with an openable seal 282 that is melted by being heated by the button heater 228. For example, the inside of the capillary nozzle 264 is filled with the openable seal 282, thus blocking the capillary nozzle 264.

As the openable seal 282, for example, indium is used. It is a matter of course that a material other than indium may be used as the openable seal 282 only if the material is evaporated by being heated by the button heater 228.

By blocking the capillary nozzle 264 with the openable seal 282, the possibility of the sample chamber 266 in the holder 262 being exposed to the atmosphere is further reduced. As a result, oxidization of the atom source can be restrained or prevented.

When the button heater 228 is energized at the start of the optical lattice clock 10, the openable seal 282 is melted by being heated by the button heater 228, and atomic gas generated from the atom source is allowed to pass through the capillary nozzle 264.

The above description exemplifies the optical lattice clock. However, those skilled in the art can apply the technology of this embodiment to other than the optical lattice clock. Specifically, the technology is also applicable to atomic clocks other than the optical lattice clock, and to an atom interferometer that is an interferometer using atoms. For example, a physics package may be configured that is for an atomic clock or for an atom interferometer, and includes the atomic beam generation device according to this embodiment and the vacuum chamber. Furthermore, this embodiment is also applicable to various types of quantum information processing devices for atoms or ionized atoms. Here, the quantum information processing devices are devices that perform measurement, sensing, and information processing using the quantum states of atoms and light, and may be, for example, a magnetic field meter, an electric field meter, a quantum computer, a quantum simulator, a quantum repeater, and the like, besides an atomic clock and an atom interferometer. The physics package of the quantum information processing device can achieve miniaturization or transportability by using the technology of this embodiment, similar to the physics package of the optical lattice clock. It should be noted that in such devices the clock transition space is not a space for clock measurement but is sometimes dealt with simply as a space for causing clock transition spectroscopy.

In these devices, use of the atomic beam generation device according to this embodiment can enable replacement and the like with an atom source with a significantly simple operation without disassembling the inside of the vacuum chamber. Miniaturization and transportability of these devices can be facilitated.

In the above description, for facilitating understanding, the specific aspects are described.

### REFERENCE SIGNS LIST

10 optical lattice clock, 12 physics package, 40, 40A atomic oven, 200, 260 cartridge, 202, 262 holder, 204, 264 capillary nozzle, 208, 266 sample chamber, 220, 220A main body, 226, 250 housing, 228 button heater, 270 coil spring, 272 plunger.

## Claims

1. An atomic beam generation device, comprising:
a cartridge (200) that includes a holder (202) accommodating an atom source; and
a main body (22) where the cartridge (200) is installed,
wherein the main body (22) includes:
an installation portion (226) where the cartridge (200) is installed;
a temperature adjustment mechanism (228) that adjusts a temperature of the atom source accommodated in the cartridge (200) installed in the installation portion (226);
an access port (222a) which is provided on an atmosphere side residing outside of the main body (22) and through which the cartridge (200) is inserted into and taken out from the main body (22); and
a pathway from the access port (222a) to the installation portion (226), and wherein
by causing the temperature adjustment mechanism (228) to adjust the temperature of the atom source, atomic gas generated from the atom source is emitted as an atomic beam (42) from the main body (22) to a vacuum side residing outside of the main body (22).

2. The atomic beam generation device according to claim 1, further comprising
a press mechanism that pushes the cartridge installed in the installation portion from a side of the access port to a side of the installation portion.

3. The atomic beam generation device according to claim 2,
wherein the press mechanism pushes the cartridge toward the installation portion using an elastic spring force of a spring.

4. The atomic beam generation device according to claim 2 or 3,
wherein an outer peripheral surface of the holder has a tapered shape toward a distal end of the holder, and
a surface of the installation portion on which the cartridge is installed has a flared shape conforming to the shape of an outer peripheral surface of the holder.

5. The atomic beam generation device according to claim 1,
wherein a threaded groove is formed in a surface of the installation portion on which the cartridge is installed, and
a threaded groove meshing with the thread groove of the installation portion is formed in an outer peripheral surface of the holder.

6. The atomic beam generation device according to any one of claims 1 to 5,
wherein the cartridge further includes
a nozzle integrated in the holder, and
the atomic gas generated from the atom source is emitted on the vacuum side through the nozzle.

7. The atomic beam generation device according to claim 6,
wherein the temperature adjustment mechanism is installed around a distal end of the nozzle.

8. The atomic beam generation device according to claim 6 or 7,
wherein the atom source is an atom source that generates the atomic gas by being heated,
the temperature adjustment mechanism is a heater that heats the atom source, and
the nozzle is sealed with an openable seal that is melted by being heated by the heater.

9. The atomic beam generation device according to any one of claims 1 to 7,
wherein the atom source is an atom source that generates the atomic gas by being cooled, and
the temperature adjustment mechanism is a cooling mechanism that cools the atom source.

10. A physics package, comprising:
the atomic beam generation device according to any one of claims 1 to 9; and
a vacuum chamber that encloses a clock transition space where atoms are arranged.

11. A physics package for an optical lattice clock, the physics package comprising the physics package according to claim 10.

12. A physics package for an atomic clock, the physics package comprising the physics package according to claim 10.

13. A physics package for an atom interferometer, the physics package comprising the physics package according to claim 10.

14. A physics package for a quantum information processing device for atoms or ionized atoms, the physics package comprising the physics package according to claim 10.

15. A physics package system comprising the physics package according to claim 10.

## Patentansprüche

1. Vorrichtung zum Erzeugen eines Atomstrahls, umfassend:
eine Kartusche (200)mit einem Halter (202), der eine Atomquelle aufnimmt; und
einen Hauptkörper (22), in dem die Kartusche (200) eingebaut ist,
wobei der Hauptkörper (22) umfasst:
einen Einbauabschnitt (226), in dem die Kartusche (200) eingebaut ist;
einen Temperaturregelungsmechanismus (228), der eine Temperatur der in der in dem Einbauabschnitt (226) eingebauten Kartusche (200) aufgenommenen Atomquelle regelt;
eine Zugangsöffnung (222a), die an einer außerhalb des Hauptkörpers (22) liegenden Atmosphärenseite vorgesehen ist und durch die die Kartusche (200) in den Hauptkörper (22) eingesetzt und aus diesem herausgenommen wird; und
einen Weg von der Zugangsöffnung (222a) zum Einbauabschnitt (226), wobei
durch Veranlassen des Temperaturregelungsmechanismus (228), die Temperatur der Atomquelle zu regeln, von der Atomquelle erzeugtes Atomgas als Atomstrahl (42) aus dem Hauptkörper (22) zu einer außerhalb des Hauptkörpers (22) befindlichen Vakuumseite emittiert wird.

2. Vorrichtung zum Erzeugen eines Atomstrahls nach Anspruch 1, ferner umfassend einen Druckmechanismus, der die in dem Einbauabschnitt eingebaute Kartusche von einer Seite der Zugangsöffnung zu einer Seite des Einbauabschnitts drückt.

3. Atomstrahlerzeugungsvorrichtung nach Anspruch 2,
bei der der Druckmechanismus die Kartusche unter Verwendung einer elastischen Federkraft einer Feder in Richtung des Einbauabschnitts drückt.

4. Atomstrahlerzeugungsvorrichtung nach Anspruch 2 oder 3, bei der eine Außenumfangsfläche des Halters eine zu einem distalen Ende des Halters hin verjüngte Form aufweist und
eine Oberfläche des Einbauabschnitts, an der die Kartusche eingebaut ist, eine aufgeweitete Form aufweist, die der Form einer Außenumfangsfläche des Halters entspricht.

5. Atomstrahlerzeugungsvorrichtung nach Anspruch 1,
bei der eine Gewindenut in einer Oberfläche des Einbauabschnitts ausgebildet ist, an der die Kartusche eingebaut ist, und
eine mit der Gewindenut des Einbauabschnitts in Eingriff stehende Gewindenut in einer Außenumfangsfläche des Halters ausgebildet ist.

6. Atomstrahlerzeugungsvorrichtung nach einem der Ansprüche 1 bis 5,
bei der die Kartusche ferner eine in den Halter integrierte Düse umfasst und
das aus der Atomquelle erzeugte Atomgas auf der Vakuumseite durch die Düse emittiert wird.

7. Atomstrahlerzeugungsvorrichtung nach Anspruch 6,
bei der der Temperaturregelungsmechanismus um ein distales Ende der Düse herum installiert ist.

8. Atomstrahlerzeugungsvorrichtung nach Anspruch 6 oder 7,
bei der die Atomquelle eine Atomquelle ist, die das Atomgas durch Erhitzen erzeugt,
der Temperaturregelungsmechanismus eine Heizvorrichtung ist, die die Atomquelle beheizt, und
die Düse mit einer öffenbaren Dichtung abgedichtet ist, die durch Erhitzen durch die Heizvorrichtung geschmolzen wird.

9. Atomstrahlerzeugungsvorrichtung nach einem der Ansprüche 1 bis 7,
bei der die Atomquelle eine Atomquelle ist, die das Atomgas durch Abkühlen erzeugt, und
der Temperaturregelungsmechanismus ein Kühlmechanismus ist, der die Atomquelle kühlt.

10. Physikpaket, umfassend:
die Atomstrahlerzeugungsvorrichtung nach einem der Ansprüche 1 bis 9; und
eine Vakuumkammer, die einen Taktübergangsraum umschließt, in dem Atome angeordnet sind.

11. Physikpaket für eine optische Gitteruhr, wobei das Physikpaket das Physikpaket nach Anspruch 10 umfasst.

12. Physikpaket für eine Atomuhr, wobei das Physikpaket das Physikpaket nach Anspruch 10 umfasst.

13. Physikpaket für ein Atominterferometer, wobei das Physikpaket das Physikpaket nach Anspruch 10 umfasst.

14. Physikpaket für eine Quanteninformationsverarbeitungsvorrichtung für Atome oder ionisierte Atome, wobei das Physikpaket das Physikpaket nach Anspruch 10 umfasst.

15. Physikpaket-System, welches das Physikpaket nach Anspruch 10 umfasst.

## Revendications

1. Dispositif de génération de faisceau atomique, comportant :
une cartouche (200) qui inclut un support (202) logeant une source d'atomes ; et
un corps principal (22) où la cartouche (200) est installée,
dans lequel le corps principal (22) inclut :
une partie d'installation (226) où la cartouche (200) est installée ;
un mécanisme d'ajustement de température (228) qui ajuste une température de la source d'atomes logée dans la cartouche (200) installée dans la partie d'installation (226) ;
un orifice d'accès (222a) qui est prévu sur un côté atmosphère résidant à l'extérieur du corps principal (22) et à travers lequel la cartouche (200) est insérée dans le et retirée du corps principal (22) ; et
une voie allant de l'orifice d'accès (222a) à la partie d'installation (226), et dans lequel
en amenant le mécanisme d'ajustement de température (228) à ajuster la température de la source d'atomes, un gaz atomique généré à partir de la source d'atomes est émis sous forme de faisceau atomique (42) du corps principal (22) vers un côté vide résidant à l'extérieur du corps principal (22).

2. Dispositif de génération de faisceau atomique selon la revendication 1, comportant en outre :
un mécanisme de presse qui pousse la cartouche installée dans la partie d'installation d'un côté de l'orifice d'accès vers un côté de la partie d'installation.

3. Dispositif de génération de faisceau atomique selon la revendication 2,
dans lequel le mécanisme de presse pousse la cartouche vers la partie d'installation à l'aide d'une force de ressort élastique d'un ressort.

4. Dispositif de génération de faisceau atomique selon la revendication 2 ou 3,
dans lequel une surface périphérique externe du support présente une forme effilée vers une extrémité distale du support, et
une surface de la partie d'installation sur laquelle la cartouche est installée présente une forme évasée conforme à la forme d'une surface périphérique externe du support.

5. Dispositif de génération de faisceau atomique selon la revendication 1,
dans lequel une rainure filetée est formée dans une surface de la partie d'installation sur laquelle la cartouche est installée, et
une rainure filetée en prise avec la rainure de filetage de la partie d'installation est formée dans une surface périphérique externe du support.

6. Dispositif de génération de faisceau atomique selon l'une quelconque des revendications 1 à 5,
dans lequel la cartouche inclut en outre
une buse intégrée dans le support, et
le gaz atomique généré à partir de la source d'atomes est émis du côté vide à travers la buse.

7. Dispositif de génération de faisceau atomique selon la revendication 6,
dans lequel le mécanisme d'ajustement de température est installé autour d'une extrémité distale de la buse.

8. Dispositif de génération de faisceau atomique selon la revendication 6 ou 7,
dans lequel la source d'atomes est une source d'atomes qui génère le gaz atomique en étant chauffée,
le mécanisme d'ajustement de température est un réchauffeur qui chauffe la source d'atomes, et la buse est scellée avec un joint ouvrant qui est fondu en étant chauffé par le réchauffeur.

9. Dispositif de génération de faisceau atomique selon l'une quelconque des revendications 1 à 7,
dans lequel la source d'atomes est une source d'atomes qui génère le gaz atomique en étant refroidie, et
le mécanisme d'ajustement de température est un mécanisme de refroidissement qui refroidit la source d'atomes.

10. Ensemble physique, comportant :
le dispositif de génération de faisceau atomique selon l'une quelconque des revendications 1 à 9 ; et
une chambre à vide qui enferme un espace de transition d'horloge dans lequel sont agencés des atomes.

11. Ensemble physique pour une horloge à réseau optique, l'ensemble physique comportant l'ensemble physique selon la revendication 10.

12. Ensemble physique pour une horloge atomique, l'ensemble physique comportant l'ensemble physique selon la revendication 10.

13. Ensemble physique pour un interféromètre atomique, l'ensemble physique comportant l'ensemble physique selon la revendication 10.

14. Ensemble physique pour un dispositif de traitement d'information quantique pour atomes ou atomes ionisés, l'ensemble physique comportant l'ensemble physique selon la revendication 10.

15. Système d'ensemble physique comportant l'ensemble physique selon la revendication 10.
